(19) Europäisches Patentamt / European Patent Office / Office européen des brevets

(11) **EP 2 966 867 A1**

(12) **EUROPEAN PATENT APPLICATION**

(43) Date of publication:
**13.01.2016 Bulletin 2016/02**

(21) Application number: **14306115.8**

(22) Date of filing: **09.07.2014**

(51) Int Cl.:
$H04N\ 19/51^{(2014.01)}$    $H04N\ 19/597^{(2014.01)}$
$H04N\ 19/172^{(2014.01)}$    $H04N\ 19/23^{(2014.01)}$
$H04N\ 19/54^{(2014.01)}$    $H04N\ 19/196^{(2014.01)}$
$H04N\ 19/463^{(2014.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Boisson, Guillaume**
  **35576 CESSON SE VIGNE (FR)**
• **Bordes, Philippe**
  **35576 CESSON SEVIGNE (FR)**
• **Guillotel, Philippe**
  **35576 CESSON SEVIGNE (FR)**
• **Kerbiriou, Paul**
  **35576 CESSON SEVIGNE (FR)**

(74) Representative: **Huchet, Anne**
**Technicolor**
**1-5 rue Jeanne d'Arc**
**92130 Issy-Les-Moulineaux (FR)**

(54) **Methods and devices for encoding and decoding a sequence of frames representing a 3D scene, and corresponding computer program products and computer-readable medium**

(57) The invention relates to a method for encoding a sequence of frames representing a 3D scene, each frame comprising at least two views of the scene, wherein each view is defined by an image and a corresponding depth-map.

According to an embodiment, the method comprises, for at least one current frame of the sequence, determining (31) a 3D base model representing the scene for the current frame and encoding (32) the nodes of the 3D base model representing the scene for the current frame; and the method comprises, for at least one subsequent frame of the sequence, predictively encoding (321) the nodes of 3D base model representing the scene for the subsequent frame, from the 3D base model representing the scene for the current frame and tracking information.

Fig. 3

EP 2 966 867 A1

**Description**

**1. Technical field**

The present disclosure relates to the encoding and the decoding of sequences of frames representing a 3D scene.

More specifically, the present disclosure addresses the issue of 3D modeling and encoding for Multiviews Video plus Depth (MVD) sequences, for example for 3D Video (3DV) or Free-viewpoint TV (FTV) applications.

**2. Background art**

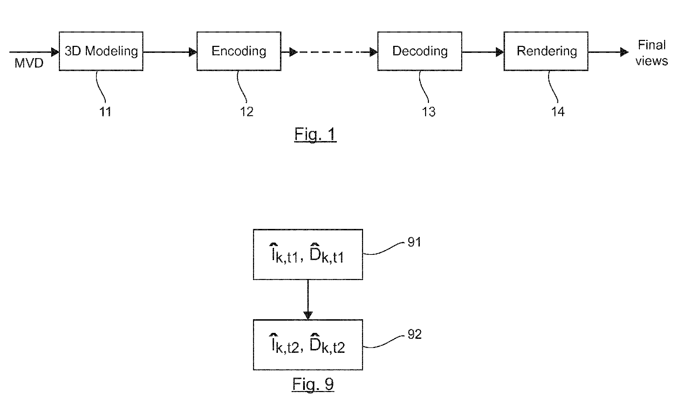

As illustrated in Figure 1, at the encoder side, MVD sequences have to be modeled in a 3D modeling module 11 and encoded in an encoding module 12 before transmission. At the decoder side, the corresponding stream received on a display terminal has to be decoded in a decoding module 13 and processed in a rendering module 14 to render final views.

In order to model MVD sequences, a technique called "mesh morphing" has been proposed by Raphaele Balter et al., in "Scalable and Efficient Video Coding Using 3-D Modeling" (Multimedia, IEEE Transactions on Multimedia, vol.8, no.6, pp.1147,1155, Dec. 2006).

More specifically, R. Balter proposes an "a posteriori" mesh morphing scheme, wherein a dynamic model is reconstructed at decoder side from a stream of successive independent 3D regular models that are estimated at encoder side for key-frames. Successive sets of vertices are integrated in a larger model by parameterizing meshes by pairs. Intermediate models are interpolated between two key-frames.

R. Balter also proposes an "a priori" mesh morphing scheme, in which the initial vertices and faces constrain the subsequent mesh constructions, leading to irregular models. Like in the "a posteriori" scheme, intermediate models are interpolated between two key-frames.

Both morphing approaches present drawbacks. Indeed, regarding "a posteriori" morphing, matching every vertex of two successive meshes increases too much the complexity with regard to the visual quality reached. On the other hand, regarding "a priori" morphing, the constrained triangulation proposed yield to an irregular model, therefore more expensive to transmit.

There is therefore a need for a new model which can be used to represent MVD sequences and which is not too expensive to transmit.

**3. Summary**

The present disclosure relates to a method for encoding a sequence of frames representing a 3D scene, each frame comprising at least two views of the scene, and wherein each view is defined by an image (color image) and a corresponding depth-map.

According to an embodiment, the method comprises, for at least one current frame of the sequence:

- determining a 3D base model representing the scene for the current frame, comprising:

  - identifying at least one feature point in at least one image of the current frame, called a current feature point,
  - tracking said current feature point in at least one image of at least one subsequent frame of the sequence, delivering tracking information,
  - matching said current feature point with at least one corresponding feature point in at least one other image of the current frame, delivering a set of at least one feature point corresponding to a same point in the scene,
  - obtaining a cluster of at least one 3D feature point, from at least said set and the corresponding depth-maps, and determining a single 3D point for each cluster, defining the position of a node of the 3D base model representing the scene for the current frame,

- encoding the nodes of the 3D base model representing the scene for the current frame,

and for said at least one subsequent frame of the sequence:

- predictively encoding the nodes of the 3D base model representing the scene for the subsequent frame, from the 3D base model representing the scene for the current frame and the tracking information.

The present disclosure thus proposes a new technique for modeling a sequence of frames representing a 3D scene, for example a MVD sequence, delivering a 3D base model, and a new technique for encoding the 3D base model, or more specifically, the position of the nodes of the 3D base model.

Such a base model comprises at least one node, and the movement of such node between two frames can be predicted thanks to the tracking information. Such a base model is thus dynamic, and the nodes forming the base model over the time define a dynamic layer or a base layer.

Therefore, the dynamic layer is based on a few reliable points, and does not aim at matching temporally every node of the model over the time. In other words, the technique according to the disclosure does not rely on mesh morphing, but consider instead only a limited set of 3D points for temporal consistency constraint.

The nodes of the base model can be encoded once for the current frame, and can be predicted for the subsequent frame thanks to the tracking information. The amount of transmitted information is therefore reduced compared to prior art techniques.

According to an embodiment, the method further comprises:

- refining the 3D base model representing the scene for the current frame, comprising:

    - generating a surface model for the current frame from corresponding depth-maps,
    - resampling the surface model, delivering a 3D refined model, and

- intra encoding the new nodes of the 3D refined model.

The "new" nodes of the 3D refined model correspond to remaining nodes for each frame.

A two-layer representation for geometry is thus proposed according to this specific embodiment, relying on feature tracking:

- the base layer or dynamic layer, dedicated to feature points of the scene, which are tracked across successive images. It is the dynamic part of the proposed geometry representation, and is dedicated to be coded predictively.
- a refinement layer containing remaining nodes for each frame. It is the refinement part of the proposed representation. Nodes of that layer are independent from a frame to the next one. They do not present any temporal consistency. Therefore they are dedicated to be intra-coded.

In particular, said resampling takes into account the positions of the nodes of the 3D base model representing the scene for the current frame, and the connectivity between the nodes.

Said resampling is used to determine the number of nodes that will form the refinement layer.

According to an embodiment, the cluster of at least one 3D feature point is determined using at least one of (and preferentially both) intrinsic parameters or extrinsic parameters of cameras used to capture the current frame.

According to an embodiment, the current frame is a key frame.

The 3D base model representing the scene for the current frame is thus determined on a reliable frame.

According to an embodiment, the sequence of frames is captured by at least three cameras.

The present disclosure also relates to a device for encoding a sequence of frames representing a 3D scene, each frame comprising at least two views of the scene, wherein each view is defined by an image and a corresponding depth-map.

According to the disclosure, the device comprises:

- a module for determining a 3D base model representing the scene for at least one current frame, comprising:

    - a module for identifying at least one feature point in at least one image of the current frame, called a current feature point,
    - a module for tracking said current feature point in at least one image of at least one subsequent frame of the sequence, delivering tracking information,
    - a module for matching said current feature point with at least one corresponding feature point in at least one other image of the current frame, delivering a set of at least one feature point corresponding to a same point in the scene,
    - a module for obtaining a cluster of at least one 3D feature point, from at least said set and the corresponding depth-maps, and for determining a single 3D point for each cluster, defining the position of a node of the 3D base model representing the scene for the current frame,

- a module for encoding the nodes of the 3D base model representing the scene for the current frame, and
- a module for predictively encoding the nodes of the 3D base model representing the scene for the subsequent frame, from the 3D base model representing the scene for the current frame and the tracking information.

Such an encoding device is especially adapted to implementing the encoding method described here above. It could of course comprise the different characteristics pertaining to the encoding method according to an embodiment, which can be combined or taken separately. Thus, the characteristics and advantages of the encoder are the same as those of the encoding method and are not described in more ample detail.

Such an encoder can be implemented in the form of an integrated circuit or a microprocessor-type electronic component. Thus, the encoding algorithm according to a specific embodiment can be implemented in various ways, especially in hardware form or in software form.

Another aspect of the disclosure pertains to a method for decoding a stream representing a sequence of frames representing a 3D scene, each frame comprising at least two views of the scene, wherein each view is defined by an image and a corresponding depth-map.

According to this aspect, the method comprises:

- reconstructing at least one current frame of the sequence, by decoding the nodes of a 3D base model representing the scene for the current frame of the sequence, carried by the stream,

wherein said 3D base model has been determined, at the encoding side, by:

- identifying at least one feature point in at least one image of the current frame, called a current feature point,
- matching said current feature point with at least one corresponding feature point in at least one other image of the current frame, delivering a set of at least one feature point corresponding to a same point in the scene,
- obtaining a cluster of at least one 3D feature point, from at least said set and the corresponding depth-maps, and determining a single 3D point for each cluster, defining the position of a node of the 3D base model representing the scene for the current frame,

- reconstructing at least one subsequent frame of the sequence, from the decoded nodes of the 3D base model representing the scene for the current frame and by decoding tracking information carried by the stream.

Such a decoding method is well suited to decode a stream generated by the encoding method described here above.

In particular, such a decoding method could decode the position of the nodes of a base model, if only a base model is used to model the 3D scene at the encoder side, or it could decode the position of the nodes of a refined model, if both a base layer and a refinement layer are used to model the 3D scene at the encoder side.

In another embodiment, the disclosure pertains to a device for decoding a stream representing a sequence of frames representing a 3D scene, each frame comprising at least two views of the scene, wherein each view is defined by an image and a corresponding depth-map.

According to the disclosure, the device comprises:

- a module for reconstructing at least one current frame of the sequence, by decoding the nodes of a 3D base model representing the scene for the current frame, carried by the stream,
  wherein said 3D base model has been determined, at the encoding side, by:

  - identifying at least one feature point in at least one image of the current frame, called a current feature point,
  - matching said current feature point with at least one corresponding feature point in at least one other image of the current frame, delivering a set of at least one feature point corresponding to a same point in the scene,
  - obtaining a cluster of at least one 3D feature point, from at least said set and the corresponding depth-maps, and determining a single 3D point for each cluster, defining the position of a node of the 3D base model representing the scene for the current frame,

- a module for reconstructing at least one subsequent frame, from the decoded nodes of the 3D base model representing the scene for the current frame and by decoding tracking information carried by the stream.

Such a decoding device is especially adapted to implementing the decoding method described here above. It could of course comprise the different characteristics pertaining to the decoding method according to an embodiment, which can be combined or taken separately. Thus, the characteristics and advantages of the decoder are the same as those of the decoding method and are not described in more ample detail.

Such a decoder can be implemented in the form of an integrated circuit or a microprocessor-type electronic component. Thus, the decoding algorithm according to an embodiment can be implemented in various ways, especially in hardware form or in software form.

A non-limitative embodiment also concerns a computer program product downloadable from a communication network and/or recorded on a medium readable by computer and/or executable by a processor, comprising program code instructions for implementing the steps of the encoding method and/or the steps of the decoding method previously described.

According to another embodiment, the disclosure relates to a non-transitory computer-readable medium comprising a computer program product recorded thereon and capable of being run by a processor, including program code instructions for implementing the steps of the encoding method and/or the steps of the decoding method previously described.

While not explicitly described, the present embodiments may be employed in any combination or subcombination.

As will be appreciated by one skilled in the art, aspects of the present principles can be embodied as a method, device, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit", "module", or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device a magnetic storage device, or any suitable combination of the foregoing.

4. List of figures

Other characteristics and advantages of embodiments of the present disclosure shall appear when reading the following description, provided by way of a non-restricted and indicative example (all of the embodiments of the present disclosure are not limited to the characteristics and advantages of the embodiments described hereinafter), and the annexed drawings, wherein:

- Figure 1 illustrates the transmission of MVD sequences according to prior art;
- Figure 2 illustrates the global framework of the disclosure;
- Figure 3 shows the main steps of the encoding method according to an embodiment;
- Figure 4 presents an example of input sequence of frames;
- Figure 5 illustrates two color images captured by the same camera at different time;
- Figure 6 illustrates two color images captured by different cameras at the same time;
- Figure 7 shows an example of base model;
- Figure 8 shows an example of refined model;
- Figure 9 presents the main steps of the decoding method according to an embodiment.

**5. Description of one embodiment**

*5.1 Global framework*

One main aspect of the disclosure relies on the definition of a new model for modeling geometry of dynamic scenes and on the encoding of the new model. According to this aspect, the model is determined on the basis of few reliable feature points of an image. More specifically, we consider dynamic scenes and aim to model their geometry, for example as nodes of a 3D mesh or skeleton, and transmit it.

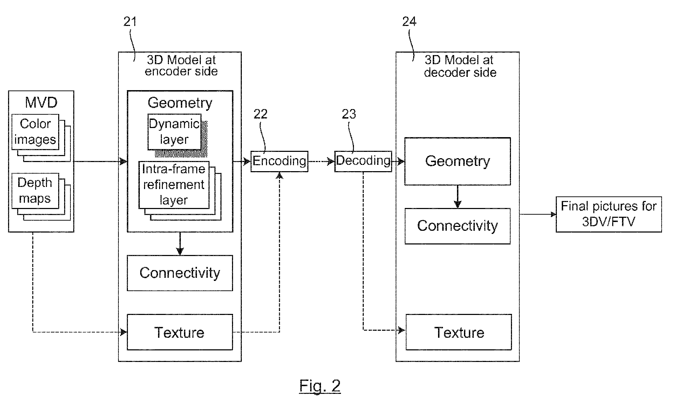

Figure 2 illustrates the global framework of the disclosure.

As illustrated in Figure 2, a sequence of frames representing a 3D scene, for example a MVD sequence, has to be transmitted. Each frame comprises at least two views of the scene, wherein each view is defined by a color image and a corresponding depth-map.

The geometry of the sequence of frames is modeled in a 3D modeling module 21. The 3D modeling module 21 outputs a base model, comprising a dynamic layer. In a particular embodiment, the 3D modeling module 21 outputs a refined model, comprising the dynamic layer and a refinement layer. The connectivity between the nodes of the model (base model or refined model) can be determined using a known technique, for example Delaunay triangulation. The connectivity does not need to be transmitted.

The texture of the sequence of frames can also be modeled in the 3D modeling module 21, using a classical technique.

Before transmission, the nodes of the model are encoded in the encoding module 22. More specifically, the dynamic layer (comprising nodes of the base model) can be encoded predictively, and the refinement layer (comprising nodes of the refined model, with the exclusion of the nodes of the base model), if available, can be intra-encoded.

At the decoder side, the corresponding stream is decoded in a decoding module 23 and processed in a rendering module 24 to rebuild the geometry of the sequence of frames, and possibly the texture of the sequence of frames. The rendering module 24 renders final images, for example for 3DV/FTV.

The present disclosure according to at least one embodiment thus proposes a solution for modeling animated natural 3D scenes which is designed for compression. The geometry is split into a dynamic layer that suits inter-frame encoding and a refinement layer dedicated to intra-encoding. Besides, at the expense of an increased complexity at decoder side according to at least one embodiment, connectivity does not need to be transmitted.

*5.2 Encoding side*

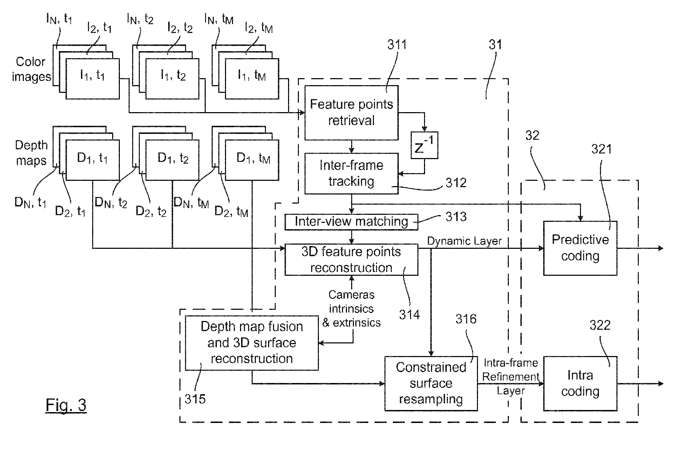

Figure 3 shows the main steps of the method for encoding a sequence of frames implemented in the modeling module 21 and in the encoding module 22 according to an embodiment.

We consider for example a sequence of M frames, wherein each frame comprises N views (N color images I, and N corresponding depth-maps D), with M and N integers greater than or equal to 2.

For at least one current frame of the sequence, for example for the first frame at the instant t1, the method implements a first step 31 to determine a 3D base model representing the scene for the current frame, and a second step 32 to encode the nodes of the 3D base model representing the scene for the current frame.

For example, the first step 31 implements the following steps:

- identifying (311) at least one feature point in at least one image of the current frame at the instant t1, called a current feature point,
- tracking (312) said current feature point in at least one image of at least one subsequent frame of the sequence, for example at the instant t2, delivering tracking information,
- matching (313) said current feature point with at least one corresponding feature point in at least one other image of the current frame, corresponding to another view, delivering a set of at least one feature point corresponding to a same point in the scene,
- obtaining (314) a cluster of at least one 3D feature point, from at least said set and the corresponding depth-maps, and determining a single 3D point for each cluster, said single 3D feature point defining the position of a node of the 3D base model representing the scene for the current frame.

At the end of the first step 31, the nodes of a 3D base model representing the scene for the current frame are determined. The connectivity between the nodes could be determined using a classical technique, like Delaunay triangulation.

Thanks to the tracking information obtained at step 312, the base model can be adapted to follow the motion of the scene. It is not compulsory to compute a new model for each frame. It is thus possible to determine the 3D base model representing the scene for the subsequent frame at the instant t2, from the 3D base model representing the scene for the current frame at the instant t1 and the tracking information.

The nodes of the 3D base model representing the scene for the current frame can be encoded classically and the nodes of the 3D base model representing the scene for the subsequent frame can be predictively encoding (321) in the second step 32.

It should be noted that the tracking 312 does not need to be implemented before the inter-view matching 313. It can be implemented after the base model representing the scene for the current frame is determined.

According to the embodiment shown in Figure 3, the 3D base model representing the scene for the current frame could be refined.

To do so, the depth-maps of the current frame could be merged (315) to generate a surface model for the current frame.

Then, the surface model is resampled (316), in order to deliver a 3D refined model.

The new nodes of the 3D refined model representing the scene for the current frame (i.e. the nodes of the 3D refined model which does not belong to the 3D base model) can be intra encoded (322) in the second step 32.

We now present in more details the different steps of the method of encoding a sequence of frames according to an embodiment of the present disclosure, through an example.

Given an input N-view sequence of color images and corresponding depth maps, together with cameras intrinsic parameters (for example focal length, type of lenses, etc.) and extrinsic parameters (for example position of the different cameras), we aim to provide a dynamic representation for the underlying geometry, suitable for transmission.

We consider for example a sequence of two frames (one frame captured at the instant t1, and one frame captured at the instant t2), wherein each frame comprises two views (one view captured by a camera k, and one view captured by a camera k+1).

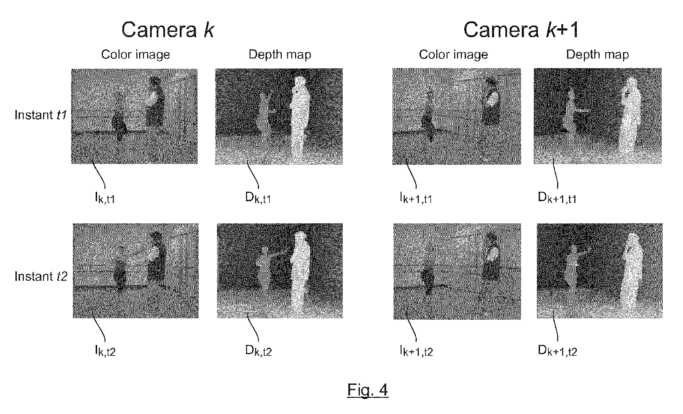

As illustrated in figure 4, each view is defined by a color image ($I_{k,t1}$, $I_{k+1,t1}$, $I_{k,t2}$, $I_{k+1,t2}$) and a corresponding depth-map ($D_{k,t1}$, $D_{k+1,t1}$, $D_{k,t2}$, $D_{k+1,t2}$).

During step 311, at least one feature point is identified in at least one image of a current frame. Such a (2D) point is called a current feature point. In this step, we look for feature points in the color images, using a known algorithm (for example SIFT or Harris). Considering feature points (also called points of interest) grants a high level of reliability in the subsequent tracking and matching steps.

Feature point's identification could be implemented on each color image of the sequence of frames. In a variant, feature point's identification could be implemented only on key images of the sequence of frames.

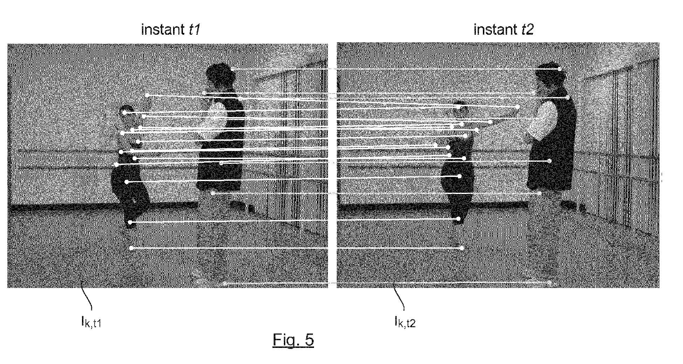

As illustrated in figure 5, we consider for example 21 feature points identified in image $I_{k,t1}$ captured by the camera k at the instant t1 (14 feature points on the dancing woman, 7 feature points on the man).

During step 312, the 21 feature points identified in image $I_{k,t1}$ are tracked in image $I_{k,t2}$ captured by the camera k at the instant t2 (corresponding to a same view at a different time), delivering tracking information. This inter-frame tracking is performed in the images captured by a same camera in order to associate corresponding 3D feature points in successive models. This will enable predictive coding of 3D points positions.

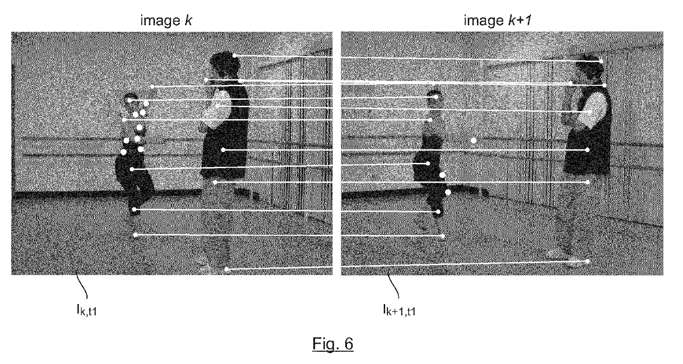

As illustrated in figure 6, during step 313, the 21 feature points identified in image $I_{k,t1}$, captured by the camera k at the instant t1, are matched with corresponding feature points in image $I_{k+1,t1}$ captured by the camera k+1 at the instant t1. Feature points matching is performed across the views in order to remove inter-camera redundancy. Thus, we obtain at least one set comprising 1 to N feature points (with N the number of views, N=2 according to this example) that correspond to the same 3D point in the scene.

For example, we obtain a first set of two feature points corresponding to the left hand of the dancing woman in image $I_{k,t1}$ and in image $I_{k+1,t1}$, a second set of two feature points corresponding to the right shoulder of the dancing woman in image $I_{k,t1}$ and in image $I_{k+1,t1}$, a third set of two feature points corresponding to the right foot of the dancing woman in image $I_{k,t1}$ and in image $I_{k+1,t1}$, a fourth set of one feature point corresponding to the left shoulder of the dancing woman in image $I_{k,t1}$, a fifth set of one feature point corresponding to the right hand of the dancing woman in image $I_{k+1,t1}$ and so on.

For each set, a cluster of at least one 3D feature point is obtained at step 314, using corresponding depth sample in the depth map, and possibly camera intrinsic and/or extrinsic parameters. In other words, each feature point is reconstructed as a 3D feature point, using at least corresponding depth sample. Each matched features points set is thus turned into a cluster of 3D points. The more accurate the calibration and the higher the quality of input depth maps, the closer the points to each other in the clusters.

For example, a cluster of two 3D feature points is obtained from the first set of two feature points corresponding to the left hand of the dancing woman in image $I_{k,t1}$ and in image $I_{k+1,t1}$, and from the corresponding depth maps $D_{k,t1}$ and $D_{k+1,t1}$, a cluster of one 3D feature point is obtained from the fourth set of one feature point corresponding to the left shoulder of the dancing woman in image $I_{k,t1}$ and from the corresponding depth map $D_{k,t1}$, and so on.

A single 3D point is then determined for each cluster, for example by averaging the coordinates of every 3D feature points of a cluster. A single 3D point defines the position of a node of a 3D base model representing the scene for the current frame at the instant t1. The nodes can be connected, for example by computing Delaunay regular triangulation from the sets of 3D points determined above for the current frame at the instant t1.

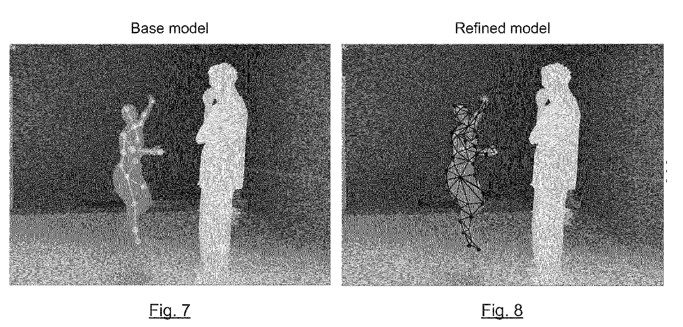

The result of step 314 for the dancing woman is illustrated in figure 7.

A new 3D base model is thus defined for representing the scene for the current frame at the instant t1. This 3D base model comprises nodes at positions defined for example by the coordinates $(X_{t1}, Y_{t1}, Z_{t1})$, corresponding to the position of the 3D points determined above for the current frame at the instant t1. It can comprise the vertices of a 3D mesh or the nodes of a 3D skeleton, and connectivity between the nodes or vertices.

Thanks to the tracking information obtained at step 312, the nodes of the 3D base model can be moved or adapted to follow the motion of the dancing woman. The 3D base model can thus be adapted to represent the scene for the current frame at the instant t2, and comprises nodes at positions defined for example by the coordinates $(X_{t2}, Y_{t2}, Z_{t2})$.

The geometry representation according to this embodiment thus relies on a limited set of moving 3D points. It defines a first layer also called "dynamic layer", dedicated to be predictively encoded. It is called "dynamic" since points can move (some may appear or disappear depending on scene's content). This first layer gathers points that are consistent across frames.

The nodes of the 3D base model (3D mesh or 3D skeleton) can thus be encoded and transmitted to a decoder.

To do so, during step 32, positions of the 3D points corresponding to nodes of the 3D base model are encoded. On their first occurrence, i.e. for the current frame at the instant t1, the three coordinates $(X_{t1}, Y_{t1}, Z_{t1})$ are encoded as such.

Then, thanks to tracking, nodes positions are predictively coded, for example:

$$\begin{pmatrix} \Delta X_{t2} \\ \Delta Y_{t2} \\ \Delta Z_{t2} \end{pmatrix} = \begin{pmatrix} X_{t2} - X_{t1} \\ Y_{t2} - Y_{t1} \\ Z_{t2} - Z_{t1} \end{pmatrix}$$

In other word, instead of encoding the coordinates $(X_{t2}, Y_{t2}, Z_{t2})$ as such for a subsequent frame at the instant t2, only the "residual" information corresponding to the tracking information is encoded.

According to a variant, assuming motions are uniform, displacements also can be predicted:

$$\begin{pmatrix} \varepsilon_X \\ \varepsilon_Y \\ \varepsilon_Z \end{pmatrix} = \begin{pmatrix} X_{t2} - (X_{t1} + \Delta X_{t2}) \\ Y_{t2} - (Y_{t1} + \Delta Y_{t2}) \\ Z_{t2} - (Z_{t1} + \Delta Z_{t2}) \end{pmatrix}$$

The predictive encoding according to step 321 thus enables the encoding and the transmission of the nodes of the 3D base model. It should be noted that connectivity does not need to be transmitted. Indeed, the connectivity could be computed both at encoder and decoder side by regular Delaunay triangulation for example.

According to a specific embodiment of the present disclosure, the 3D base model can also be refined. To do so, we define according to this specific embodiment a second layer also called "refinement layer", dedicated to be encoded on an intra basis. This second layer gathers remaining points. It gathers underlying model nodes that are not reliable enough to be in the dynamic layer.

The geometry representation according to this embodiment thus relies on a full set of moving 3D points.

More specifically, during step 315, a surface model (for example a surface mesh) is determined, from the input depth maps. Several methods can be used to that purpose. For example, Poisson surface reconstruction can be performed from the point cloud corresponding to every input depth samples. Alternatively, a variant of space carving can be used, as described in "Space carving MVD sequences for modeling natural 3D scenes" by Y. Alj et al. (Proc. SPIE 8290, Three-Dimensional Image Processing (3DIP) and Applications II, February 2012).

Step 315 can possibly use the camera intrinsic and extrinsic parameters for depth maps fusion and 3D surface reconstruction.

The 3D surface obtained at step 315 can be resampled at step 316. The resampling takes into account the positions of the nodes of the 3D base model representing the scene for the current frame, and the connectivity between the nodes. It thus depends on two constraints. One regards nodes or vertices, as the refined model nodes should include the projections of the points belonging to the dynamic layer on the surface. The other regards connectivity. For example, the refined model can result from a Delaunay regular triangulation.

The result of step 316 for the dancing woman is illustrated in figure 8.

A new 3D refined model is thus defined for representing the scene for the current frame at the instant t1. It can comprise the vertices of a 3D mesh or the nodes of a 3D skeleton, and connectivity between the nodes or vertices.

During step 322, positions of the 3D points corresponding to new nodes of the refinement layer are intra-encoded.

For each frame, the nodes of the 3D refined model (3D mesh or 3D skeleton) can thus be encoded and transmitted to a decoder. The connectivity between the nodes does not need to be transmitted as it can be determined both at encoder and decoder side, for example by computing Delaunay triangulation from the sets of nodes/3D points.

### *5.3 Decoding* side

Figure 9 shows the main steps of the method for decoding a stream representing a sequence of frames representing a 3D scene, implemented in the decoding module 23 and in the rendering module 24 according to an embodiment of the present disclosure.

We first consider that a decoder receives a stream comprising the nodes of a 3D base model, obtained as described above.

During a first step 91, at least one current frame of the sequence is reconstructed, by decoding nodes of a 3D base model representing the scene for the current frame of the sequence, carried by the stream. For example, frame at the instant t1 is reconstructed by decoding positions of the 3D points corresponding to nodes of the 3D base model representing the current frame at the instant t1, for example $(X_{t1}, Y_{t1}, Z_{t1})$.

During a second step 92, at least one subsequent frame of the sequence is reconstructed, from the position of the nodes of the 3D base model representing the scene for the current frame and by decoding tracking information carried by the stream. For example, frame at the instant t2 is reconstructed from the position of the nodes of the 3D base model representing the scene for the frame at the instant t1, for example $(X_{t1}, Y_{t1}, Z_{t1})$, and by decoding tracking information carried by the stream,

for example $(\Delta X_{t2}, \Delta Y_{t2}, \Delta Z_{t2})$.

If the base model has been refined before transmission, the above-mentioned steps 91 and 92 can be implemented on all the nodes of the refined model (i.e. on the nodes of the base model and on the new nodes of the refined model).

As already mentioned, the disclosure can be used to encode and decode MVD sequences, for example for 3D Video (3DV) or Free-viewpoint TV (FTV) applications. However, the disclosure is not limited to these specific applications, and can be used as a new encoding technique for base layer according to SVC for example.

**Claims**

1. A method for encoding a sequence of frames representing a 3D scene,
   each frame comprising at least two views of the scene, wherein each view is defined by an image and a corresponding depth-map,
   wherein the method comprises, for at least one current frame of the sequence:

   - determining (31) a 3D base model representing the scene for the current frame, comprising:

     - identifying (311) at least one feature point in at least one image of the current frame, called a current feature point,
     - tracking (312) said current feature point in at least one image of at least one subsequent frame of the sequence, delivering tracking information,
     - matching (313) said current feature point with at least one corresponding feature point in at least one other image of the current frame, delivering a set of at least one feature point corresponding to a same point in the scene,
     - obtaining (314) a cluster of at least one 3D feature point, from at least said set and the corresponding depth-maps, and determining a single 3D point for each cluster, defining the position of a node of the 3D base model representing the scene for the current frame,

   - encoding (32) the nodes of the 3D base model representing the scene for the current frame,

   and wherein the method comprises, for said at least one subsequent frame of the sequence:

   - predictively encoding (321) the nodes of 3D base model representing the scene for the subsequent frame, from the 3D base model representing the scene for the current frame and the tracking information.

**2.** The method according to claim 1, wherein the method further comprises:

- refining the 3D base model representing the scene for the current frame, comprising:

    - generating (315) a surface model for the current frame from corresponding depth-maps,
    - resampling (316) the surface model, delivering a 3D refined model, and

- intra encoding (322) new nodes of the 3D refined model.

**3.** The method according to claim 2, wherein said resampling takes into account the positions of the nodes of the 3D base model representing the scene for the current frame, and the connectivity between the nodes.

**4.** The method according to any one of claim 1 to 3, wherein the cluster of at least one 3D feature point is determined using at least one of intrinsic parameters or extrinsic parameters of cameras used to capture the current frame.

**5.** The method according to any one of claim 1 to 4, wherein said current frame is a key frame.

**6.** The method according to any one of claim 1 to 5, wherein the sequence of frames is captured by at least three cameras.

**7.** A device for encoding a sequence of frames representing a 3D scene, each frame comprising at least two views of the scene, wherein each view is defined by an image and a corresponding depth-map, wherein the device comprises:

- a module for determining a 3D base model representing the scene for at least one current frame, comprising:

    - a module for identifying at least one feature point in at least one image of the current frame, called a current feature point,
    - a module for tracking said current feature point in at least one image of at least one subsequent frame of the sequence, delivering tracking information,
    - a module for matching said current feature point with at least one corresponding feature point in at least one other image of the current frame, delivering a set of at least one feature point corresponding to a same point in the scene,
    - a module for obtaining a cluster of at least one 3D feature point, from at least said set and the corresponding depth-maps, and for determining a single 3D point for each cluster, defining the position of a node of the 3D base model representing the scene for the current frame,

- a module for encoding the nodes of the 3D base model representing the scene for the current frame, and
- a module for predictively encoding the nodes of the 3D base model representing the scene for the subsequent frame, from the 3D base model representing the scene for the current frame and the tracking information.

**8.** **A method for decoding** a stream representing a sequence of frames representing a 3D scene, each frame comprising at least two views of the scene, wherein each view is defined by an image and a corresponding depth-map, wherein the method comprises:

- reconstructing (91) at least one current frame of the sequence, by decoding the nodes of a 3D base model representing the scene for the current frame of the sequence, carried by the stream, wherein said 3D base model has been determined, at the encoding side, by:

    - identifying at least one feature point in at least one image of the current frame, called a current feature point,
    - matching said current feature point with at least one corresponding feature point in at least one other image of the current frame, delivering a set of at least one feature point corresponding to a same point in the scene,
    - obtaining a cluster of at least one 3D feature point, from at least said set and the corresponding depth-maps, and determining a single 3D point for each cluster, defining the position of a node of the 3D base model representing the scene for the current frame,

- reconstructing (92) at least one subsequent frame of the sequence, from the decoded nodes of the 3D base model representing the scene for the current frame and by decoding tracking information carried by the stream.

**9.** **A device for decoding** a stream representing a sequence of frames representing a 3D scene, each frame comprising at least two views of the scene, wherein each view is defined by an image and a corresponding depth-map,
wherein the device comprises:

- a module for reconstructing at least one current frame of the sequence, by decoding the nodes of a 3D base model representing the scene for the current frame, carried by the stream,
wherein said 3D base model has been determined, at the encoding side, by:

- identifying at least one feature point in at least one image of the current frame, called a current feature point,
- matching said current feature point with at least one corresponding feature point in at least one other image of the current frame, delivering a set of at least one feature point corresponding to a same point in the scene,
- obtaining a cluster of at least one 3D feature point, from at least said set and the corresponding depth-maps, and determining a single 3D point for each cluster, defining the position of a node of the 3D base model representing the scene for the current frame,

- a module for reconstructing at least one subsequent frame, from the decoded nodes of the 3D base model representing the scene for the current frame and by decoding tracking information carried by the stream.

10. **A computer program product** comprising software code adapted to perform a method for encoding a sequence of frames representing a 3D scene,
each frame comprising at least two views of the scene, wherein each view is defined by an image and a corresponding depth-map,
wherein the software code is adapted to perform, for at least one current frame of the sequence:

- determining a 3D base model representing the scene for the current frame, comprising:

- identifying at least one feature point in at least one image of the current frame, called a current feature point,
- tracking said current feature point in at least one image of at least one subsequent frame of the sequence, delivering tracking information,
- matching said current feature point with at least one corresponding feature point in at least one other image of the current frame, delivering a set of at least one feature point corresponding to a same point in the scene,
- obtaining a cluster of at least one 3D feature point, from at least said set and the corresponding depth-maps, and determining a single 3D point for each cluster, defining the position of a node of the 3D base model representing the scene for the current frame,

- encoding the nodes of the 3D base model representing the scene for the current frame,

and wherein the software code is adapted to perform, for said at least one subsequent frame of the sequence:

- predictively encoding the nodes of the 3D base model representing the scene for the subsequent frame, from the 3D base model representing the scene for the current frame and the tracking information.

11. **A computer program product** comprising software code adapted to perform a method for decoding a stream representing a sequence of frames representing a 3D scene, each frame comprising at least two views of the scene, wherein each view is defined by an image and a corresponding depth-map, wherein the software code is adapted to perform:

- reconstructing at least one current frame of the sequence, by decoding the nodes of a 3D base model representing the scene for the current frame of the sequence, carried by the stream, wherein said 3D base model has been determined, at the encoding side, by:

- identifying at least one feature point in at least one image of the current frame, called a current feature point,
- matching said current feature point with at least one corresponding feature point in at least one other image of the current frame, delivering a set of at least one feature point corresponding to a same point in the scene,
- obtaining a cluster of at least one 3D feature point, from at least said set and the corresponding depth-maps, and determining a single 3D point for each cluster, defining the position of a node of the 3D base model representing the scene for the current frame,

- reconstructing at least one subsequent frame of the sequence, from the decoded nodes of the 3D base model representing the scene for the current frame and by decoding tracking information carried by the stream.

12. A non-transitory computer-readable medium comprising a computer program product recorded thereon and capable of being run by a processor, including program code instructions for implementing the steps of the encoding method according to at least one of claims 1 to 6 and/or the steps of the decoding method according to claim 8.

MVD → 3D Modeling → Encoding ─ ─ ─ ─ ► Decoding → Rendering → Final views

11    12    13    14

Fig. 1

$\hat{I}_{k,t1}, \hat{D}_{k,t1}$ — 91

$\hat{I}_{k,t2}, \hat{D}_{k,t2}$ — 92

Fig. 9

Fig. 2

Fig. 3

Fig. 4

instant *t1*  instant *t2*

$I_{k,t1}$  $I_{k,t2}$

<u>Fig. 5</u>

image *k*                                        image *k+1*

$I_{k,t1}$                                        $I_{k+1,t1}$

Fig. 6

Base model

Refined model

Fig. 7

Fig. 8

**EUROPEAN SEARCH REPORT**

Application Number

EP 14 30 6115

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOPHE DEHAIS ET AL: "From rendering to tracking point-based 3D models", IMAGE AND VISION COMPUTING, vol. 28, no. 9, 1 September 2010 (2010-09-01), pages 1386-1395, XP055009224, ISSN: 0262-8856, DOI: 10.1016/j.imavis.2010.03.001 * the whole document * | 1-12 | INV. H04N19/51 H04N19/597 H04N19/172 H04N19/23 H04N19/54 H04N19/196 H04N19/463 |
| X | WERNER BAILER ET AL: "Tracking and Clustering Salient Features in Image Sequences", VISUAL MEDIA PRODUCTION (CVMP), 2010 CONFERENCE ON, IEEE, PISCATAWAY, NJ, USA, 17 November 2010 (2010-11-17), pages 17-24, XP031853444, ISBN: 978-1-4244-8872-8 | 1,7-12 | |
| A | * the whole document * | 2-6 | |
| A | FUA P ET AL: "Stable Real-Time 3D Tracking Using Online and Offline Information", IEEE TRANSACTIONS ON PATTERN ANALYSIS AND MACHINE INTELLIGENCE, IEEE COMPUTER SOCIETY, USA, vol. 26, no. 10, 1 October 2004 (2004-10-01), pages 1385-1391, XP011116546, ISSN: 0162-8828, DOI: 10.1109/TPAMI.2004.92 * the whole document * | 1-12 | TECHNICAL FIELDS SEARCHED (IPC) H04N |

-/--

The present search report has been drawn up for all claims

| Place of search | Date of completion of the search | Examiner |
|---|---|---|
| Munich | 22 October 2014 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GRACE TSAI ET AL: "Real-time indoor scene understanding using Bayesian filtering with motion cues", COMPUTER VISION (ICCV), 2011 IEEE INTERNATIONAL CONFERENCE ON, IEEE, 6 November 2011 (2011-11-06), pages 121-128, XP032101186, DOI: 10.1109/ICCV.2011.6126233 ISBN: 978-1-4577-1101-5 * the whole document * | 1-12 | |
| A | LAM C P ET AL: "HYPOTHESIS VERIFICATION USING PARAMETRIC MODELS AND ACTIVE VISION STRATEGIES", COMPUTER VISION AND IMAGE UNDERSTANDING, ACADEMIC PRESS, US, vol. 68, no. 2, 1 November 1997 (1997-11-01), pages 209-236, XP000724646, ISSN: 1077-3142, DOI: 10.1006/CVIU.1997.0554 * the whole document * | 1-12 | |

TECHNICAL FIELDS
SEARCHED      (IPC)

The present search report has been drawn up for all claims

| Place of search | Date of completion of the search | Examiner |
|---|---|---|
| Munich | 22 October 2014 | Cyranka, Oliver |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAPHAELE BALTER et al.** Scalable and Efficient Video Coding Using 3-D Modeling. *Multimedia, IEEE Transactions on Multimedia,* December 2006, vol. 8 (6), 1147, , 1155

- **Y. ALJ et al.** Space carving MVD sequences for modeling natural 3D scenes. *Proc. SPIE 8290, Three-Dimensional Image Processing (3DIP) and Applications II,* February 2012